# FASCICULE DE BREVET EUROPEEN

(11) **EP 1 571 036 B1**
(45) Date de publication et mention de la délivrance du brevet: **21.10.2009**
(21) Numéro de dépôt: 05300112.9
(22) Date de dépôt: 14.02.2005
(51) Int. Cl.: B60N 2/30

(54) **Siège pour véhicule automobile comportant un habillage d'une articulation de dossier**
Kraftfahrzeugsitz mit Rückenlehnengelengbekleidung
Automotive vehicle seat with backrest hinge covering

(30) Priorité: 02.03.2004 FR 0450409
(43) Date de publication de la demande: 07.09.2005
(73) Titulaire: RENAULT S.A.S., 92100 Boulogne Billancourt (FR)
(72) Inventeur: Perez, Jea Claude, 78450 VILLEPREUX (FR); Souville, Philippe, 78180, MONTIGNY LE BRETONNEUX (FR)

(56) Documents cités:
- WO-A-03/074320
- DE-A- 4 410 681
- DE-A- 10 049 667

## Description

L'invention concerne un siège de véhicule automobile comportant un habillage d'une articulation de dossier, et plus particulièrement un habillage d'une articulation localisée à la jonction de deux dossiers.

Afin d'accroître la modularité intérieure des véhicules, certains sièges, et plus particulièrement des banquettes arrière, comportent des dossier fractionnables. Une partie du dossier peut-être alors utilisée par un passager pendant que la deuxième partie est rabattue afin de permettre le chargement d'objets longs.

Ce type de dossier comporte au moins une articulation localisée à la jonction des dossiers de siège. Cette articulation laisse apparaître un trou, dans certaines configurations de banquette. La présence de ce trou peut créer des dysfonctionnement ou des usures prématurées de l'articulation, dans le cas où des objets y tombent.

Le document DE 10049667 décrit un système auto enrouleur dans lequel une paroi flexible fixée d'une part au système au bas d'un dossier et d'autre part au haut du dossier par un crochet se déploie et se rabat selon que le dossier est en position portefeuille ou pas. En cas de disfonctionnement du système enrouleur, la paroi flexible devient inutile.

Les banquettes arrière, telles que par exemple décrites dans la demande de brevet N° FR03/12480 déposée par la demanderesse, peuvent comporter une sangle permettant la manipulation de la banquette arrière en particulier lors de la mise dans la position dite en portefeuille. Cette sangle est localisée à la base du dossier derrière la banquette afin de pouvoir être manipulée à partir du coffre. La sangle est apparente et peut subir les agressions des objets ou des produits qui sont déposés dans le coffre, ce qui peut la salir ou l'usée prématurément.

Afin de pallier les problèmes de l'état de la technique, l'invention a pour objet un siège de véhicule automobile comportant un habillage d'une articulation de dossier.

L'invention a également pour objet, un habillage permettant le rangement d'une sangle de manipulation d'un siège.

Selon une caractéristique de l'invention, le siège comporte un habillage de l'articulation de dossier formé d'une lame flexible, muni d'au moins une enveloppe en tissu, formant un moyen d'obturation d'une ouverture formée au niveau de l'articulation à la jonction des deux dossiers.

Selon une caractéristique de l'invention, la lame flexible est portée par un boîtier muni d'une cavité de rangement d'une sangle de manipulation du siège.

Selon une caractéristique de l'invention, la lame est fixée, par l'une de ses extrémités, au boîtier par l'intermédiaire d'un pion.

Selon une caractéristique de l'invention, le pion traverse le boîtier et forme un moyen de fixation dudit boîtier, muni de la lame flexible, sur une patte, support d'habillage, d'une partie de la structure du siège.

Selon une caractéristique de l'invention, la lame flexible comporte, à une extrémité libre, une tête de fixation sur le boîtier, de manière à former une boucle.

Selon une caractéristique de l'invention, le boîtier comporte un couvercle d'obturation de la cavité.

Selon une caractéristique de l'invention, la cavité comporte une paroi de fond munie d'une ouverture destinée au passage de la sangle de manipulation.

D'autres caractéristiques et avantages de l'invention apparaîtront à la lecture de la description d'exemples de réalisation d'un siège de véhicule automobile comportant un habillage d'une articulation de dossier aux dessins annexés dans lesquels :
- La figure 1 représente une vue de la partie arrière du dossier d'une banquette sans l'habillage selon l'invention.
- La figure 2 représente une vue perspective de l'habillage selon l'invention, sans enveloppe de tissu.
- La figure 3 représente un détail de l'enveloppe de tissu sur la lame flexible.
- La figure 4 représente une coupe de l'habillage selon l'invention suivant le plan de délimitation de deux parties de dossier.

Dans la description qui suit les expressions avant et arrière seront à comprendre par rapport à l'avant d'un siège 1, où les passagers sont généralement assis, et l'arrière du siège 1 formé par la partie située derrière les passagers assis sur ledit siège.

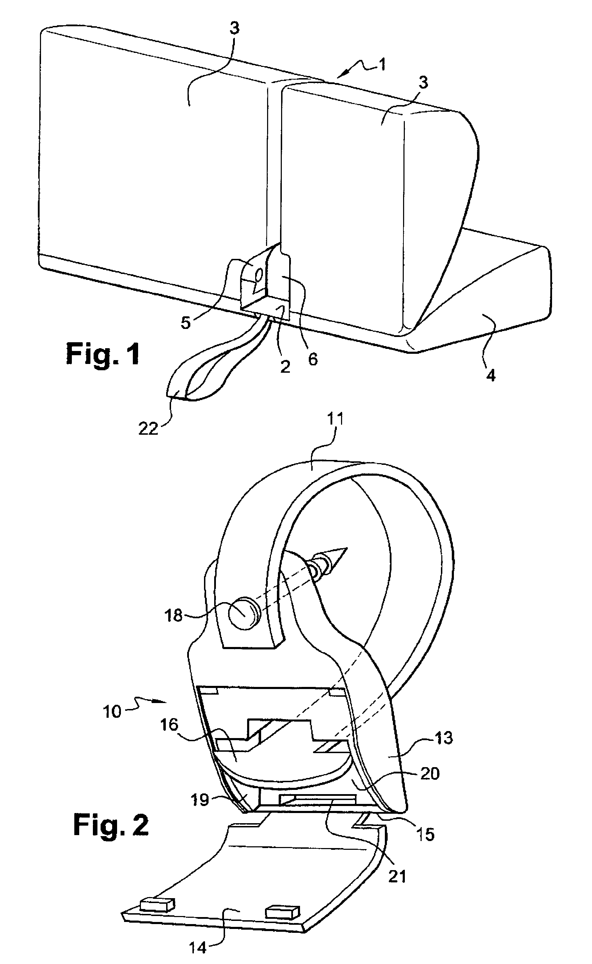

Tel que représenté à la figure 1, le siège 1 est constitué d'une structure 2 de siège portant au moins un dossier 3 contigu à une assise 4. Le dossier 3 est fractionnable en au moins deux parties, égales ou inégales. Sans changer l'objet de l'invention l'assise 4 peut-être également fractionnable. Dans notre exemple de réalisation, le siège 1, formant une banquette arrière, est rabattable dans une position dite en portefeuille. La position en portefeuille correspond au rabattement du dossier 3 sur l'assise 4 et du pivotement de l'ensemble autour d'un axe localisé devant la partie avant de l'assise 4, jusqu'à une position sensiblement verticale, afin d'augmenter les capacités de chargement.

Tel que représenté à la figure 2, le dossier 3 fractionnable comporte une articulation 5 permettant le pivotement indépendant de chacune des parties de dossier 3. L'espace réalisé entre les flasques latéraux de dossier fixés sur l'articulation provoque une ouverture 6 entre la partie avant et arrière du dossier 3, rendant visible l'articulation 5 du dossier.

L'habillage 10 de l'articulation est constitué d'une lame flexible 11, par exemple en plastique, fixée à un boîtier 12. Le boîtier 12 comporte un corps 13 muni d'un couvercle 14 mobile autour d'une charnière 15 disposée dans notre exemple de réalisation transversalement à la direction de la lame 11. Le couvercle comporte des moyen de fixation, tels que des clips, afin de le maintenir en position fermée sur le corps 13 du boîtier 12. Le boîtier 12 est dimensionné de manière à obturer l'ouverture 6 réalisée par l'articulation sur la partie arrière des dossiers.

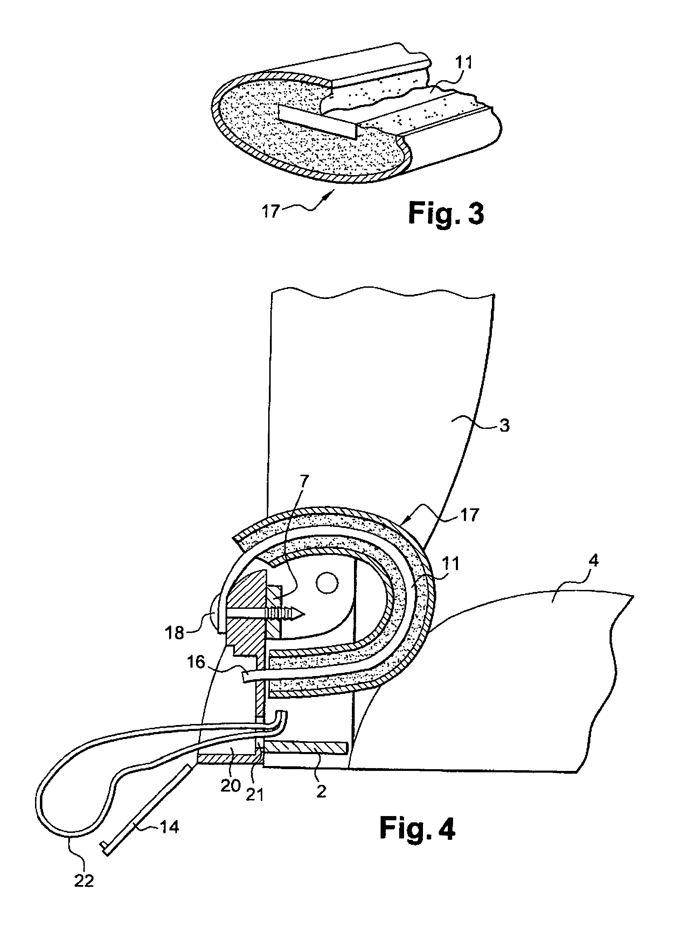

La lame 11 est fixée par une de ses extrémités au boîtier 12 et comporte à son extrémité libre une tête de fixation 16 destinée à être reçue par un orifice de réception du boîtier 12 afin de former une boucle, telle que représentée aux la figures 2 et 4. La lame 11 porte un habillage 17 de mousse et de tissus coordonnés au tissu du siège 1, tel que représenté sur la figure 3 mais non représenté à la figure 2 afin d'en faciliter la lecture.

La fixation de la lame 11 sur le boîtier 12 est réalisée par un pion de fixation 18 débouchant, en direction de l'intérieur de la boucle formée par la lame 11. Le pion 18 est suffisamment long pour être utilisé pour la fixation, de l'ensemble du boîtier 12 équipé de la lame 11, sur une partie de la structure 2 du siège 1.

Le boîtier 12 comporte également une cavité 19 dont la paroi de fond 20 dispose d'une ouverture 21, localisé dans sa partie inférieure, au travers de laquelle passe une sangle 22 de manipulation du siège. La sangle 22 de manipulation peut être formée d'une simple sangle, fixée par une de ses extrémités à la structure du siège, ou d'une boucle dont les deux extrémités sont fixées à la structure du siège.

La mise en place de l'habillage 10 de l'articulation est simple et rapide à réaliser. L'opérateur prend l'habillage 10 formé du boîtier 12 (dont le couvercle 14 est ouvert) et de la lame flexible 11 équipée de son tissu 17. La sangle 22 de manipulation est introduite dans l'ouverture 21 formée dans le boîtier 12. La tête de fixation de la lame flexible 11 est introduite, dans l'ouverture formée dans le dossier par l'articulation, au-dessus d'une patte 7 support d'habillage portée par la structure 2 du siège, afin de contourner ladite patte 7 et d'introduire la tête de fixation 16 de la lame flexible 11 dans l'orifice de réception. La patte 7 support d'habillage peut-être portée uniquement par la structure d'un des dossiers 3 de siège. Le pion de fixation 18 est alors introduit dans un perçage présent dans la patte support 7 afin de fixer l'ensemble du boîtier 12. La sangle 22 de manipulation est alors enroulée ou pliée afin d'être rangée dans la cavité 19 prévue à cet effet dans le boîtier 12. Le couvercle 14 est alors fermé. L'opérateur peut effectuer ensuite une traction sur la boucle formée par la lame flexible 11 à partir de la face avant du dossier 3 de siège afin de positionner correctement l'habillage en tissu.

Selon une autre variante de réalisation non représentée, le montage du boîtier 12 équipé de la lame flexible 11 peut-être effectué par l'avant du dossier. Dans ce cas le pion de fixation 18 de la lame flexible 11 sur le boîtier 12 sera inversé afin de pouvoir être reçu par la patte 7 support d'habillage. Il est possible d'utiliser d'autres moyens de solidarisation de l'ensemble d'habillage avec la structure sans modifier l'objet de l'invention.

L'invention peut-être appliquée à des sièges indépendants, ou à un siège dont le dossier est dissocié de l'assise.

## Revendications

1. Siège (1) de véhicule automobile comportant au moins un dossier (3), contigu à une assise (4), ledit dossier (3) étant monté sur une articulation (5), porté par un élément de structure (2) du siège, et localisé entre deux parties de dossier (3) mobile indépendamment l'une de l'autre, **caractérisé en ce que** le siège (1) comporte un habillage (10) de l'articulation (5) de dossier formé d'une lame flexible (11), muni d'au moins une enveloppe en tissu (17), formant un moyen d'obturation d'une ouverture (6) formée au niveau de l'articulation (5) à la jonction des deux dossiers (3).

2. Siège de véhicule automobile selon la revendication 1, **caractérisé en ce** la lame flexible (11) est portée par un boîtier (12) muni d'une cavité (19) de rangement d'une sangle (22) de manipulation du siège.

3. Siège de véhicule automobile selon la revendication 2, **caractérisé en ce que** la lame (11) est fixée, par l'une de ses extrémités, au boîtier (12) par l'intermédiaire d'un pion (18).

4. Siège de véhicule automobile selon la revendication 3, **caractérisé en ce que** le pion (18) traverse le boîtier (12) et forme un moyen de fixation dudit boîtier (12), muni de la lame flexible (11), sur une patte (7), support d'habillage, d'une partie de la structure (2) du siège.

5. Siège de véhicule automobile selon l'une quelconque des revendications précédentes, **caractérisé en ce que** la lame flexible (11) comporte, à une extrémité libre, une tête de fixation(16) sur le boîtier (12), de manière à former une boucle.

6. Siège de véhicule automobile selon l'une quelconque des revendications 2 à 5, **caractérisé en ce que** le boîtier (12) comporte un couvercle (14) d'obturation de la cavité (19).

7. Siège de véhicule automobile selon l'une quelconque des revendications 2 à 6, **caractérisé en ce que** la cavité (19) comporte une paroi de fond (20) munie d'une ouverture (21) destinée au passage de la sangle (22) de manipulation.

## Claims

1. Motor vehicle seat (1) comprising at least one back (3), contiguous to a bed (4), said back (3) being mounted on an articulation (5), borne by a structural element (2) of the seat, and located between two portions of the back (3) that can move independently of one another, **characterized in that** the seat (1) comprises a cladding (10) of the back articulation (5) consisting of a flexible plate (11), provided with at least one jacket made of fabric (17), forming a means of blocking an opening (6) formed at the level of the articulation (5) at the junction of the two backs (3).

2. Motor vehicle seat according to Claim 1,
**characterized in that** the flexible plate (11) is borne by a module (12) provided with a cavity (19) for storing a strap (22) for manipulating the seat.

3. Motor vehicle seat according to Claim 2,
**characterized in that** the plate (11) is fixed, by one of its ends, to the module (12) via a pin (18).

4. Motor vehicle seat according to Claim 3,
**characterized in that** the pin (18) passes through the module (12) and forms a means of fixing said module (12), provided with the flexible plate (11), on a tab (7), supporting the cladding, of a portion of the structure (2) of the seat.

5. Motor vehicle seat according to any one of the preceding claims, **characterized in that** the flexible plate (11) comprises, at a free end, a head (16) for fixing to the module (12), so as to form a loop.

6. Motor vehicle seat according to any one of Claims 2 to 5, **characterized in that** the module (12) comprises a cover (14) for blocking the cavity (19).

7. Motor vehicle seat according to any one of Claims 2 to 6, **characterized in that** the cavity (19) comprises a bottom wall (20) provided with an opening (21) designed to allow the manipulation strap (22) to pass through.

## Patentansprüche

1. Kraftfahrzeugsitz (1), der mindestens eine an eine Sitzfläche (4) angrenzende Rückenlehne (3) aufweist, wobei die Rückenlehne (3) auf ein Gelenk (5) montiert ist, das von einem Strukturelement (2) des Sitzes getragen wird und zwischen zwei Rückenlehnenteilen (3) angeordnet ist, die unabhängig voneinander beweglich sind, **dadurch gekennzeichnet, dass** der Sitz (1) eine Verkleidung (10) des Rückenlehnengelenks (5) aufweist, die von einer mit mindestens einer Stoffumhüllung (17) versehenen biegsamen Lamelle (11) gebildet wird, die eine Verschlusseinrichtung einer Öffnung (6) bildet, welche in Höhe des Gelenks (5) an der Verbindungsstelle der zwei Rückenlehnen (3) gebildet ist.

2. Kraftfahrzeugsitz nach Anspruch 1, **dadurch gekennzeichnet, dass** die biegsame Lamelle (11) von einem Gehäuse (12) getragen wird, das mit einem Hohlraum (19) zur Unterbringung eines Gurts (22) zur Bedienung des Sitzes versehen ist.

3. Kraftfahrzeugsitz nach Anspruch 2, **dadurch gekennzeichnet, dass** die Lamelle (11) über eines ihrer Enden mittels eines Stifts (18) am Gehäuse (12) befestigt ist.

4. Kraftfahrzeugsitz nach Anspruch 3, **dadurch gekennzeichnet, dass** der Stift (18) das Gehäuse (12) durchquert und eine Einrichtung zur Befestigung des mit der elastischen Lamelle (11) versehenen Gehäuses (12) an einer Verkleidungsträgerlasche (7) eines Teils der Struktur (2) des Sitzes bildet.

5. Kraftfahrzeugsitz nach einem der vorhergehenden Ansprüche, **dadurch gekennzeichnet, dass** die biegsame Lamelle (11) an einem freien Ende einen Kopf (16) zur Befestigung am Gehäuse (12) aufweist, um eine Schlaufe zu bilden.

6. Kraftfahrzeugsitz nach einem der Ansprüche 2 bis 5, **dadurch gekennzeichnet, dass** das Gehäuse (12) einen Deckel (14) zum Verschließen des Hohlraums (19) aufweist.

7. Kraftfahrzeugsitz nach einem der Ansprüche 2 bis 6, **dadurch gekennzeichnet, dass** der Hohlraum (19) eine Rückwand (20) aufweist, die mit einer für den Durchlass des Bedienungsgurts (22) bestimmten Öffnung (21) versehen ist.
